(19) Europäisches Patentamt / European Patent Office / Office européen des brevets

(11) **EP 2 549 707 A1**

(12) **EUROPEAN PATENT APPLICATION**

(43) Date of publication:
**23.01.2013 Bulletin 2013/04**

(51) Int Cl.:
**H04L 27/26** (2006.01)    **H04L 27/38** (2006.01)

(21) Application number: **11305941.4**

(22) Date of filing: **19.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ST-Ericsson SA**
**1228 Plan-les-Ouates (CH)**

(72) Inventor: **Dubouloz, Samuel**
**74100 ANNEMASSE (FR)**

(74) Representative: **Cabinet Plasseraud**
**52, rue de la Victoire**
**75440 Paris Cedex 09 (FR)**

(54) **Iq imbalance estimation in receiver systems**

(57) The present invention concerns a method of determining an imbalance estimation of a complex input signal received in a receiver system, the complex input signal being separated in an imaginary component on a first path and a real component on a second path. The method comprises determining at least one value representative of an imbalance on the basis of the imaginary component and of the real component and, determining a level value representative of an input signal level based on the imaginary component and on the real component. The method further comprises determining a gain depending on the determined level value, scaling the determined value representative of an imbalance based on the determined gain and determining at least one imbalance estimation on the scaled representative value, the imbalance estimation being used for in-phase/quadrature imbalance correction.

FIG. 4

## Description

### Technical Field

The present invention generally relates to digital compensation of Radio Frequency (RF) impairments and more particularly to amplitude and phase imbalance estimation.

It finds applications, in particular, while not exclusively, in cellular RF Application Specific Integrated Circuits (ASICs), adapted to receive multi-carrier signals such as Orthogonal Frequency Division Multiplexing (OFDM) signals, Long Term Evolution (LTE) signals or Wideband Code Division Multiple Access (WCDMA) signals.

### BACKGROUND

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

In communication systems, phase and gain imbalances between In-phase (I) path and Quadrature (Q) path lead to degrade a reception quality of a complex signal received, a real component of the signal being forwarded through the I path and an imaginary component of the signal being forwarded through the Q path.

In such systems, gain imbalance can refer to gain differences between signals on the I path and signals on the Q path and phase imbalance refers to when a phase separation between the I path and the Q path is not exactly equal to 90 degrees. These imbalances may, for example, be due to that component differences between I and Q path components of previous receiver processing units (e.g. analogue radio and downconversion), and can lead to a loss of orthogonality between the signals on the Q and I paths, which can seriously degrade the performance of the receiver system. In the following, IQ amplitude/phase imbalance may be referred to as just imbalance.

Many existing communication receiver systems are adapted to perform imbalance compensation, in which it is usually assumed that a received signal has a level, which is correctly scaled by Gain Control Algorithm (AGC). Otherwise, imbalance estimation becomes very slow or inefficient when the signal level is too low. In particular, this is because of the limited resolution due to digital signal processing. Indeed, a step of updating an imbalance estimation is especially calculated for a signal in full scale and is thus not adapted to a low signal. The accuracy of the estimation is then reduced for signals having a low level.

IQ imbalance estimation algorithms are typically based on averaging combinations of I path and Q path.

In receiver systems, digital frequency correction is typically performed after IQ imbalance estimation (and correction) to avoid being biased by phase rotation.

In OFDM multi-carrier systems, a communication channel is divided into a plurality of subcarriers. Data is transmitted between communication stations in a plurality of overlapping subcarriers, thus increasing a channel throughput. To avoid interferences between the subcarriers, such subcarriers can be orthogonal, meaning that a peak of one subcarrier is positioned at a given frequency, which represents a substantial null to adjacent carriers. When multi-carrier signals are received, the subcarriers need to be separated before being frequency shifted and filtered.

In other multi-carrier systems such as aggregated carriers (reception of several carriers, not necessarily from the same standard, e.g. GSM carrier and a WCDMA carrier), the number of carriers is limited and there is no overlapping between aggregated carriers. The carriers are then separated by filtering after applying phase or frequency rotation.

In multi-carrier systems, it is not possible to implement the receiver structure described above, in which signal scaling is followed by an IQ imbalance correction, which is followed by frequency correction. Indeed, the subcarriers have to be separated for frequency shifting and filtering before signal scaling, as there are separate gain controls for each subcarrier.

Thus, if IQ imbalance correction is carried out before frequency correction, this step will be suboptimal in case of a low signal level, because the gain scaling is performed after the frequency correction.

Furthermore, if IQ imbalance estimation is carried after frequency correction and gain scaling, IQ imbalance estimation would be mixed by frequency correction, which is not compatible with a multi-carrier system.

Thus there is a need to efficiently perform IQ imbalance estimation in a multi-carrier system in the case of a low signal level received by the system.

### SUMMARY

To address these needs, a first aspect of the present invention relates to a method of determining an imbalance estimation of a complex input signal received in a receiver system, the complex input signal being separated in at least one imaginary component on a first path and at least one real component on a second path, the method comprising:

- determining at least one value representative of an imbalance on the basis of the imaginary component and of the real component;

- determining a level value representative of an input signal level based on the imaginary component and on the real component;

- determining a gain depending on the determined level value;

- scaling said determined value representative of an imbalance based on the determined gain;

- determining at least one imbalance estimation on the basis of the scaled representative value, said imbalance estimation being used for in-phase/quadrature imbalance correction.

Embodiments of the present invention introduce a scaling of the value representative of an imbalance based on the level of the input signal, which allows adapting the IQ imbalance estimation to the level value. Thus, even in the case of a low signal level, the IQ imbalance estimation is accurate and the input signal can be corrected accordingly.

According to some embodiments of the invention, the representative values comprise at least one amplitude values representative of an amplitude imbalance and at least one phase values representative of a phase imbalance, both amplitude and phase imbalance values are scaled based on the determined gain, a phase imbalance estimation is determined on the basis of the phase value and an amplitude imbalance estimation is determined on the basis of the amplitude value.

Such embodiments allow estimating both phase and gain imbalances with an increased accuracy, for any level of input signal.

In some embodiments, the amplitude value is obtained by calculating a difference between a squared real component and a squared imaginary component and the phase imbalance value is obtained by calculating an argument of the product of the real component and the imaginary component.

According to some embodiments, the level value is determined by selecting the greatest value among the absolute value of the imaginary component and among the absolute value of the real component.

Such embodiments enable to select a level value which is representative of the input signal level. The selection is then only based on comparisons, which is simple to implement and enables to accurately select a gain to scale the accumulated imbalance values.

According to some embodiments of the invention, the complex input signal is progressively received in the form of a plurality of frames, each frame being separated in an imaginary component and a real component, a value representative of an imbalance is determined for each frame based on the imaginary component, and the imbalance estimation is determined based on the plurality of scaled representative values.

In complement, the level value can be determined by summing the squared values of the imaginary components of the frames and the squared values of the real components of the frames.

Such embodiments propose another alternative to determine a level value, which is representative of the input signal level, in order to accurately select a gain to scale the accumulated imbalance values.

In some embodiments, the receiver system is a multi-carrier system. In some other embodiments, the receiver system can be a system that can receive aggregated carriers.

A second aspect of the invention concerns an arrangement for estimating an imbalance estimation of a complex input signal received in a receiver system, the complex input signal being separated in at least one imaginary component and at least one real component, the arrangement comprising:

- at least one determination unit for determining at least one value representative of an imbalance on the basis of the imaginary component and of the real component;

- a signal level determination unit for determining a level value representative of an input signal level based on the imaginary component and on the real component;

- a gain unit for determining a gain depending on the determined level value;

- at least one scaling unit for scaling the determined value representative of an imbalance based on the determined gain;

- at least one imbalance determination unit for determining at least one imbalance estimation on the basis of the scaled representative value, the imbalance estimation being used for in-phase/quadrature correction.

According to some embodiments of the invention, the arrangement comprises an amplitude determination unit for determining at least one amplitude value representative of an amplitude imbalance and a phase determination unit for determining at least one phase value representative of a phase imbalance, the arrangement comprises an amplitude scaling unit for scaling the amplitude value based on the determined gain and a phase scaling unit for scaling the phase value based on the determined gain, the arrangement comprises an amplitude imbalance determination unit for determining an amplitude imbalance estimation on the basis of the scaled amplitude value and a phase imbalance determination unit for determining a phase imbalance estimation on the basis of the scaled phase value.

In complement, the amplitude determination unit is adapted to obtain the amplitude value by calculating a difference between a squared real component and a squared imaginary component or the other way around and the phase determination unit is adapted to obtain the phase value by calculating an argument of the product of the real component of the frame by the imaginary component of the frame.

In some embodiments, the signal monitoring unit is adapted to determine the level value by selecting the greatest value among the absolute value of the imaginary component and among the absolute value of the real component.

A third aspect of the invention concerns a receiver according to anyone of the embodiments of the second aspect of the invention. The receiver can also be a multi-carrier receiver or a system that can receive aggregated carriers.

A fourth aspect of the invention concerns a communication device comprising a receiver according to anyone of the embodiments of the third aspect of the invention.

A fifth aspect of the invention relates to a computer program product comprising a computer readable medium having stored thereon computer program instructions loadable into a computing device and adapted to — when loaded into and executed by the computing device - cause the computing device to perform a method according to anyone of the embodiments of the first aspect of the invention.

**BRIEF DESCRIPTION OF THE DRAWINGS**

Embodiments of the present invention are illustrated by way of example, and not by way of limitation, in the figures of the accompanying drawings, in which like reference numerals refer to similar elements and in which:

- Figure 1 illustrates an entry stage of a multi-carrier system adapted to receive a multi-carrier input signal;

- Figure 2 represents an architecture of a first possible IQ imbalance estimation unit, which can be implemented, for example, in the entry stage illustrated on Figure 1;

- Figures 3.a, 3.b and 3.c respectively illustrates a graph representing an error vector magnitude versus a number of accumulated frames of a dual carrier input signal, a graph representing an updated amplitude imbalance estimation versus time and a graph representing an updated phase imbalance estimation versus time, for a plurality of input signal levels, obtained in a multi-carrier system comprising the first IQ estimation unit illustrated on Figure 2;

- Figure 4 represents a second possible IQ imbalance estimation unit according to some embodiments of the invention, which can be implemented, for example, in the entry stage illustrated on Figure 1;

- Figures 5.a, 5.b and 5.c respectively illustrates a graph representing an error vector magnitude versus the number of accumulated frames of a dual carrier input signal, a graph representing an updated amplitude imbalance estimation versus time and a graph representing an updated phase imbalance estimation versus time, for a plurality of input signal levels, obtained in a multi-carrier system comprising the second IQ estimation unit illustrated on Figure 4;

- Figure 6 illustrates a flowchart representing the steps of a method according to some embodiments of the invention.

**DESCRIPTION OF EMBODIMENTS**

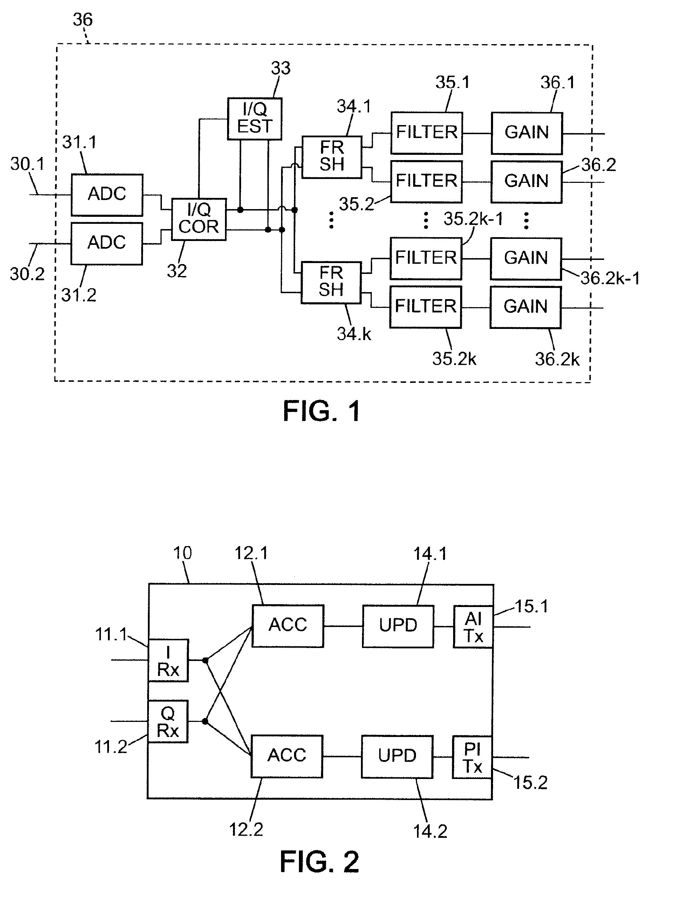

Referring to Figure 1, there is shown an entry stage 36 of a multi-carrier receiver system adapted to receive a multi-carrier input signal. The input signal is a complex signal, which is received over time in the form of a plurality of frames, each frame having an imaginary component and a real component, real components being forwarded on a first path 30.1 and imaginary components being forwarded on a second path 30.2. The several subcarriers of the input complex signal are initially received together in the form of a block covering a specific bandwidth and IQ imbalances, which are mostly introduced by signal processing at the front end of the receiver (radio reception, down conversion), should be corrected before the subcarriers are separated.

The entry stage 36 comprises a first Analogical to Digital Converter (ADC) 31.1 and a second ADC 31.2, which are respectively adapted to translate the real components and the imaginary components of the input signal from an analog signal to a digital signal. Previously, the analog signal may have been amplified by a Low Noise Amplifier (LNA) and mixed and translated by a mixer from a Radio Frequency (RF) band in a Base Band (BB). Additional IQ imbalances between the imaginary components Q and the real components I may have been further introduced by the mixer and the LNA.

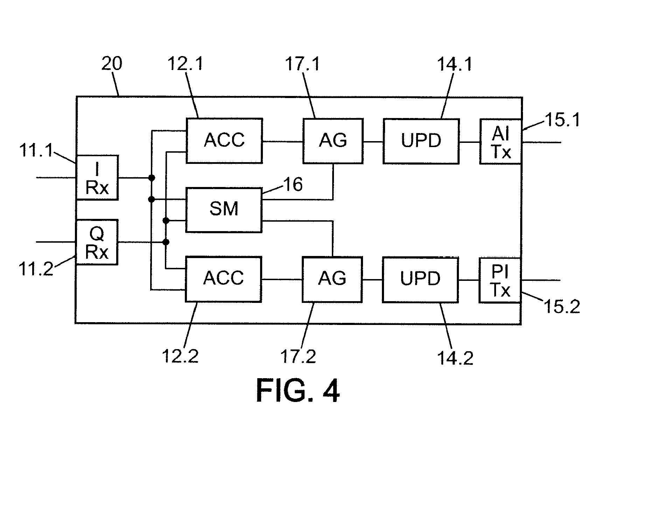

The ADCs 31.1 and 31.2 then respectively forward the real and imaginary components to an IQ imbalance correction unit 32, which is adapted to correct the phase and amplitude imbalances between the imaginary components and the real components on the basis of a phase imbalance estimation and of an amplitude imbalance estimation, which are provided (e.g. continuously updated) by an IQ imbalance estimation unit 33, which receives the corrected real and imaginary components at an output of the IQ imbalance correction unit 32. The IQ imbalance estimation unit 33 will be further described with reference to Figures 2 and 4.

The corrected signal (real and imaginary components) is then forwarded to a plurality of frequency shifting units 34.1-34.k, each frequency shifting unit being dedicated to one of the k subcarriers. Then, for each subcarrier i, the real and imaginary components are respectively filtered by filtering units 35.(2i-1)-35.2i and then scaled by scaling units 36.(2i-1)-36.2i, i varying between 1 and k, to be further processed by other stages of the multi-carrier system. The frequency shifting, filtering, scaling and further processing may be realized using any suitable known or future methods. Frequency shifting and filtering enable to separate the different subcarriers of the corrected signal.

Such architecture is given for illustrative purpose and it is noted that no restriction is attached to the architecture of the entry stage of the multi-carrier system. For example, any other digital signal processing block (e.g. sample rate conversion, digital filtering, other RF impairment compensation...) could be added without loss of generality.

Referring to Figure 2, there is shown a first possible IQ imbalance estimation unit 10. The first IQ imbalance estimation unit 10 can be implemented for example in the IQ imbalance estimation unit 33 of Figure 1.

The first IQ imbalance estimation unit 10 comprises an I path reception interface 11.1 and a Q path input interface 11.2. For example, these interfaces 11.1 and 11.2 can be connected at the output of the IQ imbalance correction unit 32 of Figure 1.

The I path reception interface 11.1 is adapted to forward the real component I of a frame of the input complex signal to an amplitude accumulation unit 12.1 and to a phase accumulation unit 12.2. The Q path input interface 11.2 is adapted to forward the imaginary component Q of a frame of the input complex signal to the amplitude accumulation unit 12.1 and to the phase accumulation unit 12.2.

The amplitude accumulation unit 12.1 is adapted to determine and accumulate a plurality of amplitude values that are representative of an amplitude imbalance, for example for a predefined number of received frames, based on both complex and imaginary components Q and I of the frames of the complex input signal. For example, the amplitude accumulation unit 12.1 can accumulate the values $(I^2-Q^2)$ or $(Q^2-I^2)$. It is noted that other algorithms well known in the art or developed in the future can be based on other equations.

The phase accumulation unit 12.2 is adapted to determine and accumulate a plurality of phase values that are representative of a phase imbalance, for example for a predefined number of received frames, based on both complex and real components Q and I of the frames of the complex input signal. For example, the phase accumulation unit 12.2 can accumulate the real part and the imaginary part of $(I*Q)$ (to determine the argument for example). It is noted that other algorithms well known in the art or developed in the future can be based on other equations.

During accumulation, the amplitude accumulation unit 12.1 can average the amplitude values and the phase accumulation unit 12.2 can average the phase values, by applying the following formulas for example:

$$\overline{x}_a = \frac{\sum_{n=1..N} x_{a,n}}{N}$$

$$\overline{x}_p = \frac{\sum_{n=1..N} x_{p,n}}{N}$$

where $\overline{x}_a$ is the average of the amplitude values and $\overline{x}_p$ is the average of imbalance values;
N is the number of accumulated values, which can be, in the case illustrated in what follows, 128 values. It is noted that any number of accumulated values can be chosen, and preferably a power of 2; and
$X_{a,n}$ is the amplitude value of index n, n varying between 1 and N and $X_{p,n}$ is the phase value of index n, n varying between 1 and N.

Considering that average of the representative values sensibly corresponds to applying a low pass filter, no restriction is attached to the way the representative values are filtered. It means that $\overline{x}_a$ (respectively $\overline{x}_p$) in the following is not necessarily the mathematical average of the amplitude (respectively phase) values but a representative value of the N accumulated amplitude (respectively phase) values.

The average of the amplitude values $\overline{x}_a$ is then forwarded to a first updating unit 14.1, which is adapted to update an amplitude imbalance estimation based on the average $\overline{x}_a$. Updating the average $\overline{x}_a$ can also correspond to a low pass filtering and enables to obtain an amplitude imbalance estimation that is relevant for IQ correction.

The average of the phase values $\overline{x}_p$ is then forwarded to a second updating unit 14.2, which is adapted to update a phase imbalance estimation based on the average $\overline{x}_p$. Updating the average $\overline{x}_p$ can also correspond to a low pass filtering and enables to obtain a phase imbalance estimation that is relevant for IQ correction.

The updated amplitude imbalance estimation is then forwarded to a first transmission interface 15.1 and the updated amplitude imbalance estimation is forwarded to a second transmission interface 15.2 , the interfaces 15.1 and 15.2 being adapted to feed an IQ correction unit, such as the IQ correction unit 32 described on Figure 1, with the updated amplitude and phase imbalance estimations. The IQ correction based on the provided IQ imbalance estimates may be realized using any suitable known or future method.

According to some embodiments, new frames of the input signal comprising new real components and new imaginary components can be further received by the IQ estimation unit 10 to continuously update the phase and gain imbalance estimations and to improve the efficiency of the IQ imbalance correction.

To determine the efficiency of the IQ imbalance estimation unit 10, simulations can be computed for a known IQ imbalance, which can be set to -5 phase degrees and 1 decibel (dB) amplitude mismatch. Then, several input signals can be input in the IQ imbalance estimation unit 10, each input signal having a different level, which can illustrate the different levels of reception quality and which can be measured in decibels below a full scale. The efficiency of the IQ imbalance estimation unit 10 can be measured by observing an Error Vector Magnitude (EVM) degradation versus time. The EVM illustrates the remaining imbalances after applying the IQ correction. In the case of a Wideband Code Division Multiple Access (WCDMA) signal, a target EVM can be around -30 dB, for example.

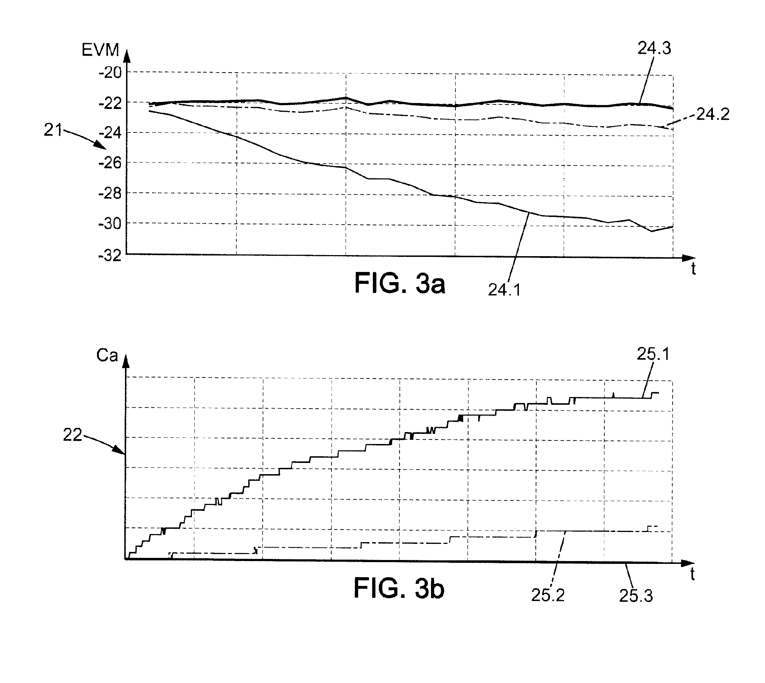

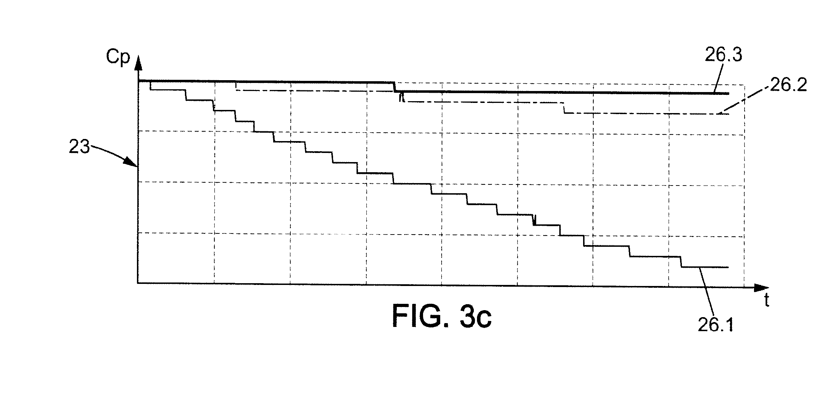

Referring to Figures 3.a, 3.b and 3.c, there is respectively shown a graph 21 representing an EVM versus the number of accumulated frames of a dual carrier input signal, a graph 22 representing the updated amplitude imbalance estimation versus time (while accumulating frames and updating the amplitude imbalance estimation) and a graph 23 representing the updated phase imbalance estimation versus time, for a plurality of input signal levels, obtained in a multi-carrier system comprising the first IQ estimation unit 10 illustrated on Figure 2.

In Figure 3.a, three curves 24.1, 24.2 and 24.3 respectively represent EVM versus time for input signal levels of 0dB, -10dB and -30dB Full Scale (dBFS), meaning average signal power compared to the average power of a signal that fills the whole scale of the AD converter. As previously explained, to have an efficient IQ correction, the EVM should rapidly converge around -30dB. This value is quite rapidly obtained for a signal level of 0dBFS. However, when the signal level decreases (-10dBFS and -30dBFS), the absolute value of the slope of the curves decreases, thus implying an inefficient IQ imbalance correction for signal levels lower than 0dBFS. Indeed, when an EVM of -30dB is reached for an input level of 0dB, an EVM of respectively -24dB and -22dB is obtained for input levels of -10dBFS and -30dBFS, thus resulting in a too low or inefficient phase and amplitude imbalance correction.

This inefficiency is due to the slow convergence of the phase and gain imbalance estimations when they are updated. Indeed, as previously explained, the updating step is performed without taking the signal level into account, because IQ mismatch estimation is usually done after signal scaling so it is considered that the signal level is the full scale.

Figure 3.b shows the amplitude imbalance estimation for the different input signal levels, versus time. Three curves 25.1, 25.2 and 25.3 respectively represent the updated amplitude imbalance estimation $C_a$ (expressed in digital scale) for signal levels of 0dBFS, -10dBFS and -30dBFS. Although the known IQ imbalance remains the same, the amplitude imbalance estimations do not tend to the same value when the dual carrier signal level varies.

Figure 3.c shows the phase imbalance estimation for the different input signal levels, versus time. Three curves 26.1, 26.2 and 26.3 respectively represent the updated phase imbalance estimation $C_p$ (expressed in digital scale) for signal levels of 0dBFS, -10dBFS and -30dBFS. Although, the known IQ imbalance remains the same, the phase imbalance estimations do not tend to the same value when the dual carrier signal level varies.

The slow convergence of curves 25.2, 25.3, 26.2 and 26.3 lead to a slow convergence of the EVM as illustrated on curves 24.2 and 24.3, because EVM results from the phase and amplitude imbalance estimations that are forwarded to the IQ imbalance correction unit 32.

Thus, the first IQ imbalance estimation unit 10 is only suitable for use with high signal level (in full scale), which is restrictive.

Referring now to Figure 4, there is shown a second possible IQ imbalance estimation unit 20 according to some embodiments of the invention, which can be implemented, for example, in the estimation unit 33 of Figure 1.

The second IQ imbalance estimation unit 20 comprises the same units, which are identified by the same references, as the units comprised in the first IQ imbalance estimation unit 10 illustrated on Figure 2.

Furthermore, the second IQ imbalance estimation unit 20 comprises a signal monitoring unit 16, which is adapted to receive the real and imaginary components of the frames that are respectively forwarded by the I path reception interface 11.1 and by the Q path reception interface 11.2. The second IQ imbalance estimation unit 20 further comprises an amplitude scaling unit 17.1 and a phase scaling unit 17.2. The amplitude scaling unit 17.1 is connected between the amplitude accumulation unit 12.1 and the first updating unit 14.1. The phase scaling unit 17.2 is connected between the phase accumulation unit 12.2 and the second updating unit 14.2. Both phase and amplitude scaling units 17.2 and 17.1 are also respectively connected to a first output and a second output of the signal monitoring unit 16.

Upon reception of the amplitude and phase components of the frames from the I path reception interface 11.1 and from the Q path reception interface 11.2, the signal monitoring unit 16 determines a level value, which is representative of the level of the input signal. To this end, the signal monitoring unit 16 can for example select the greatest value among the absolute values of the imaginary components of the frames and among the absolute values of the real components of the frames.

However, no restriction is attached to the way the input signal is processed by the signal monitoring unit 16 to determine the level value representative of the signal level. For example, in some embodiments, the level value can be determined by selecting the greatest value among a first average value of the imaginary components of the frames and a second average value of the real components of the frames. In some other embodiments, the level value can be selected by applying a Least Squares Method (LSM) to the imaginary and real components of the frames. In some other embodiments of the invention, the level value can be determined based on a sum of the squared imaginary components and the squared real components. The level value can also be determined based on other combinations of the real and imaginary components, for example based on a weighted sum.

On the basis of the determined level value, the amplitude scaling unit 17.1 and the phase scaling unit 17.2 can apply a gain to scale the accumulated amplitude values and the accumulated phase values, or as previously illustrated to scale the average of the amplitude values and the average of the phase value, which are respectively received from the amplitude accumulation unit 12.1 and from the phase accumulation unit 12.2. This scaling step does not degrade the following calculations. Indeed:

$$\frac{\sum\limits_{n=1..N}(a.x_{a,n})}{N} = a \star \frac{\sum\limits_{n=1..N}x_{a,n}}{N}$$

$$\frac{\sum\limits_{n=1..N}(a.x_{p,n})}{N} = a \star \frac{\sum\limits_{n=1..N}x_{p,n}}{N}$$

where *a* is the gain used to scale the accumulated amplitude imbalances values and the accumulated phase imbalance values respectively in the amplitude scaling unit 17.1 and in the phase scaling unit 17.2.

In some embodiments, the gain *a* can be determined as being the reciprocal of the determined level value. Other calculations can be applied to the determined level value to calculate the gain *a* to apply.

Thus, even in case of a low input signal level, the average of the amplitude values and the average of the phase values can be scaled accordingly before updating the amplitude and phase imbalance estimations, thus improving the efficiency of the phase and amplitude IQ imbalance correction. Indeed, by considering a gain that is the reciprocal of the level value, the updating step is performed on values that had been obtained for a signal having a level sensibly equal to the full scale, thus improving the efficiency of the determination of the phase and amplitude imbalance estimations.

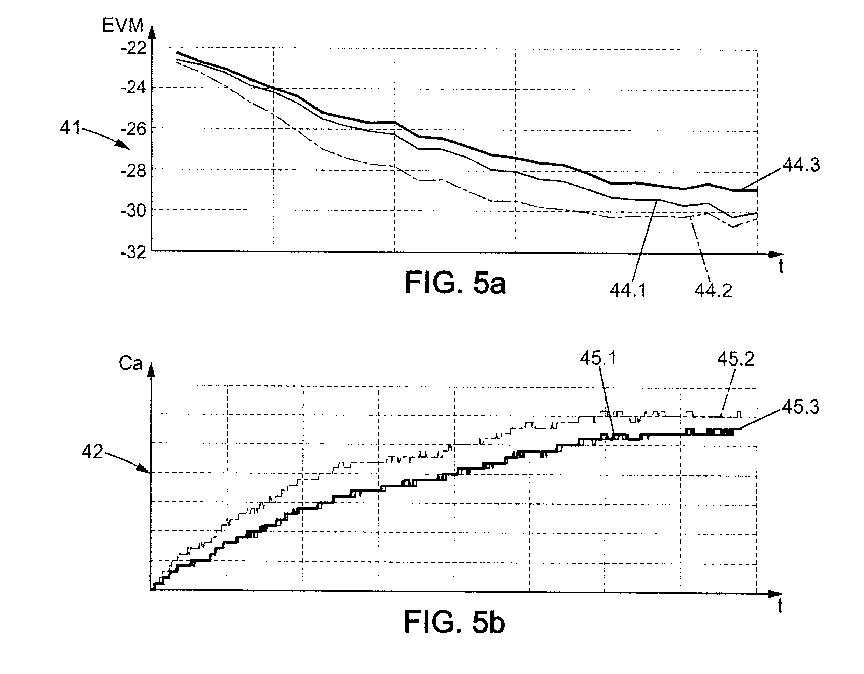

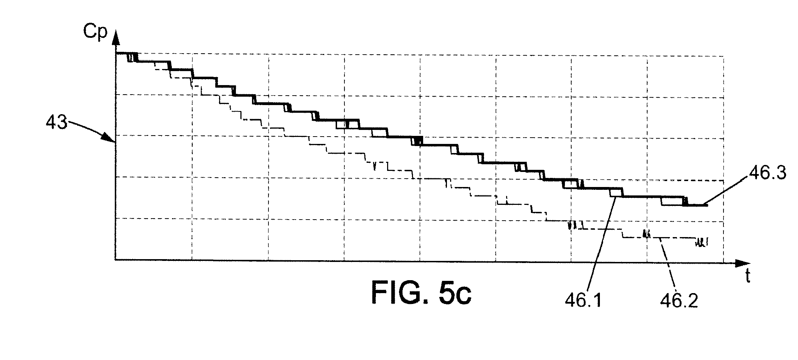

Referring to Figures 5.a, 5.b and 5.c there is respectively shown a graph 41 representing an error vector magnitude (EVM) versus the number of accumulated frames of a WCDMA dual carrier input signal, a graph 42 representing the updated amplitude imbalance estimation versus time (while accumulating frames and updating the amplitude imbalance estimation) and a graph 43 representing the updated phase imbalance estimation versus time, for a plurality of input signal levels, obtained in a multi-carrier system comprising the second IQ estimation unit 20 illustrated on Figure 4.

On Figure 5.a, three curves 44.1, 44.2 and 44.3 respectively represent EVM versus time for input signal levels of 0dBFS, -10dBFS and -30dBFS. As previously explained, to have an efficient IQ correction, the EVM should rapidly converge around -30dB. As it is illustrated, the three curves 44.1, 44.2 and 44.3 converge to a value approximately equal to -30 dB, even when the input signal level is very low (-30 dBFS). It implies that the IQ correction is efficient and that the phase and amplitude imbalance estimations converge rapidly even when the input signal level is low. This is because the second IQ estimation unit 20 takes into account a level value representative of the input signal level, to scale the average of amplitude values and the average of phase values.

Figure 5.b shows variations of the amplitude imbalance estimation for the different input signal levels, versus time. Three curves 45.1, 45.2 and 45.3 respectively represent the updated amplitude imbalance estimation $C_a$ (expressed in digital scale) for signal levels of 0dBFS, -10dBFS and -30dBFS. The known IQ imbalance remains the same and the amplitude imbalance estimations tend to the same value when the WCDMA dual carrier signal level varies.

Figure 5.c shows variations of the phase imbalance estimation for the different input signal levels, versus time. Three curves 46.1, 46.2 and 46.3 respectively represent the updated phase imbalance estimation $C_p$ (expressed in digital scale) for signal levels of 0dBFS, -10dBFS and -30dBFS. The known IQ imbalance remains the same and the phase imbalance estimations tend to the same value when the WCDMA dual carrier signal level varies.

Thus, the second IQ imbalance estimation unit 20 enables to obtain an efficient IQ imbalance correction in multi-carrier systems.

It is noted that the same efficiency is obtained in case of a WCDMA single carrier signal, or when a target EVM could be around -40 dB. Indeed, the second IQ imbalance estimation unit 20 according to the invention can be implemented for any number or received carriers system and can be adapted to any type of signal.

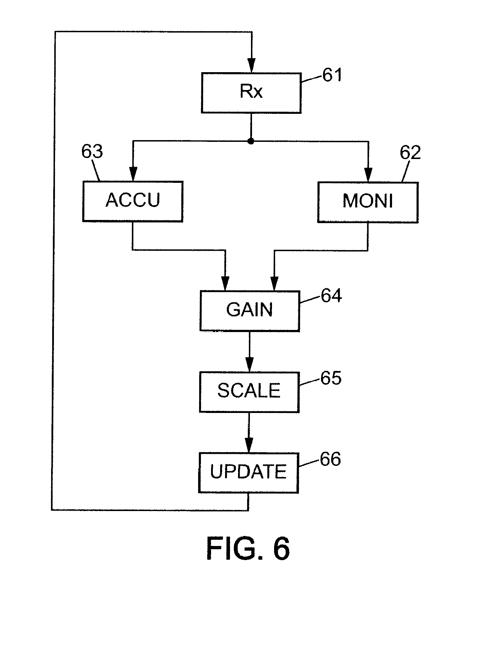

Referring to Figure 6, there is shown a flowchart representing the steps of the method according to some embodiments of the invention.

At step 61, a complex input signal is received by an IQ imbalance estimation unit, such as second IQ imbalance estimation unit 20 illustrated on Figure 4, the complex signal being received in the form of, for example, a series of frames, each frame comprising a real component I and an imaginary component Q.

At step 63, phase and amplitude values are determined and accumulated for a predefined time, e.g. a predefined number of frames, for example. Phase values and amplitude values are determined on the basis of the I and Q components of the received signals. The phase and amplitude values can then be accumulated and averaged.

In some embodiments phase and amplitude values determined from I and Q frames at step 63 are filtered with any kind of digital filter processing instead of being accumulated and averaged.

At step 62, a level value representative of a signal level of the input signal is calculated on the basis of the I and Q components of the received frames, at step 62.

In some embodiments, steps 62 and 63 are performed in parallel. However, steps 62 and 63 can be performed in sequence and no restriction is attached to the order in which steps 62 and 63 are performed.

At step 64, a gain is determined on the basis of the level value determined at step 62.

At step 65, the determined gain is used to scale both the average of the amplitude values and the average of the phase values.

Two gains can also be determined at step 64 to respectively scale at step 65 the average of the amplitude values and the average of the phase values.

The scaled average of the amplitude values and the scaled average of the imbalance values are then used to respectively determine updates of an amplitude imbalance estimation and update of a phase imbalance estimation at step 66. These estimations are then forwarded from the IQ estimation unit 33 to the IQ correction unit 32 for correction of the signals issued from the first and second AD converters 31.1 and 31.2 to provide corrected signals to the frequency shifting units 34.1 and 34.2.

The previous steps can be repeated iteratively while receiving further signals (e.g. new frames) comprising new real and imaginary components, in order to improve the accuracy of the amplitude and phase imbalance estimations and thus improve the IQ imbalance correction.

It is also noted that the examples illustrated is before concern a multi-carrier system. However, embodiments of the invention can be implemented in a similar way in a single carrier system, having a unique carrier for example. Indeed, the present invention mainly concerns the estimation of IQ imbalance, which is performed before the separation of the aggregated carriers in a multi-carrier system. Thus, the same imbalance estimation unit 20 can be implemented in any type of receiver.

The present invention can also be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. A method of determining an in-phase/quadrature imbalance estimation of a complex input signal received in a receiver system, said complex input signal being separated in at least one imaginary component on a first path and at least one real component on a second path, wherein the method comprises:

   - determining at least one value representative of an imbalance on the basis of the imaginary component and of the real component;

- determining (62) a level value representative of an input signal level based on the imaginary component and on the real component;
- determining (64) a gain depending on the determined level value;
- scaling (65) said determined value representative of an imbalance based on the determined gain;
- determining (66) at least one imbalance estimation on the basis of the scaled representative value, said imbalance estimation being used for in-phase/quadrature imbalance correction.

2. The method according to claim 1, wherein the representative values comprise at least one amplitude value representative of an amplitude imbalance and at least one phase value representative of a phase imbalance, wherein both amplitude and phase values are scaled based on the determined gain, wherein a phase imbalance estimation is determined on the basis of the phase value and wherein an amplitude imbalance estimation is determined on the basis of the amplitude value.

3. The method according to claim 2, wherein the amplitude value is obtained by calculating a difference between a squared real component and a squared imaginary component or the other way around and wherein the phase value is obtained by calculating an argument of the product of the real component and the imaginary component.

4. The method according to anyone of claims 1 to 3, wherein the level value is determined (62) by selecting the greatest value among the absolute value of the imaginary component and among the absolute value of the real component.

5. The method according to anyone of claims 1 to 4, wherein the complex input signal is progressively received in the form of a plurality of frames, each frame being separated in an imaginary component and a real component, wherein a value representative of an imbalance is determined for each frame based on the imaginary component and the real component of said frame, and wherein the imbalance estimation is determined based on the plurality of scaled representative values.

6. The method according to claim 5, wherein the level value is determined (62) by summing the squared values of the imaginary components of the frames and the squared values of the real components of the frames.

7. A method according to anyone of claims 1 to 6, wherein the receiver system is a multi-carrier system.

8. An arrangement for estimating an imbalance estimation of a complex input signal received in a receiver system, said complex input signal being separated in at least one imaginary component and in at least one real component, wherein the arrangement comprises:

   - at least one determination unit (12.1;12.2) for determining at least one value representative of an imbalance, on the basis of the imaginary component and of the real component;
   - a signal level determination unit (16) for determining a level value representative of an input signal level based on the imaginary component and on the real component;
   - a gain unit (16) for determining a gain depending on the determined level value;
   - at least one scaling unit (17.1;17.2) for scaling said determined value representative of an imbalance based on the determined gain;
   - at least one imbalance determination unit (14.1;14.2) for determining at least one imbalance estimation on the basis of the scaled representative value, said imbalance estimation being used for in-phase/quadrature imbalance correction.

9. The arrangement according to claim 8, wherein the arrangement comprises an amplitude determination unit (12.1) for determining at least one amplitude value representative of an amplitude imbalance and a phase determination unit (12.2) for determining at least one phase value representative of a phase imbalance, wherein the arrangement comprises an amplitude scaling unit (17.1) for scaling the amplitude value based on the determined gain and a phase scaling unit (17.2) for scaling the phase value based on the determined gain, wherein the arrangement comprises an amplitude imbalance determination unit (14.1) for determining an amplitude imbalance estimation on the basis of the scaled amplitude value and a phase imbalance determination unit (14.2) for determining a phase imbalance estimation on the basis of the scaled phase value.

10. the arrangement according to claim 9, wherein the amplitude determination unit (12.1) is adapted to obtain the amplitude value by calculating a difference between a squared real component and a squared imaginary component or the other way around and wherein the phase determination unit (12.2) is adapted to obtain the phase imbalance value by calculating an argument of the product of the real component of the frame by the imaginary component of the frame.

11. The arrangement according to anyone of claims 8 to 10, wherein the signal monitoring unit (16) is adapted to determine the level value by selecting the greatest value among the absolute value of the imaginary component and among the absolute value of the real component.

**12.** A receiver comprising the arrangement according to any of claims 8 to 11.

**13.** The receiver according to claim 12, wherein the receiver is a multi-carrier receiver.

**14.** A communication device comprising the receiver according to anyone of claims 12 or 13.

**15.** A computer program product comprising a computer readable medium having stored thereon computer program instructions loadable into a computing device and adapted to - when loaded into and executed by said computing device - cause the computing device to perform a method according to anyone of claims 1 to 7.

FIG. 1

FIG. 2

FIG. 3a

FIG. 3b

EP 2 549 707 A1

FIG. 3c

FIG. 4

FIG. 5a

FIG. 5b

EP 2 549 707 A1

FIG. 5c

FIG. 6

Europäisches
Patentamt

European
Patent Office

Office européen
des brevets

# EUROPEAN SEARCH REPORT

Application Number

EP 11 30 5941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/026178 A2 (NXP BV [NL]; SAYERS ANTHONY D [GB]) 6 March 2008 (2008-03-06)<br>* figure 2 *<br>* figure 3 *<br>* figure 4 *<br>* figure 5 *<br>* figure 6 *<br>* page 8, line 5 - page 12, line 14 *<br>----- | 1-15 | INV.<br>H04L27/26<br>H04L27/38 |
| X | US 2005/135521 A1 (NEMER ELIAS [US] ET AL) 23 June 2005 (2005-06-23)<br>* figure 5 *<br>* paragraph [[0016]] - paragraph [[0021]] *<br>* paragraph [[0035]] - paragraph [[0036]] *<br>----- | 1-15 | |
| X | US 2002/097812 A1 (WISS JOHN [US]) 25 July 2002 (2002-07-25)<br>* figure 5 *<br>* paragraph [[0058]] - paragraph [[0059]] *<br>* paragraph [[0063]] *<br>----- | 1-15 | |
| | | | TECHNICAL FIELDS SEARCHED (IPC)<br><br>H04L<br>H03D |
| X | US 2009/147886 A1 (ASTROM MAGNUS [SE] ET AL) 11 June 2009 (2009-06-11)<br>* paragraph [[0012]] - paragraph [[0019]] *<br>* paragraph [[0075]] - paragraph [[0076]] *<br>* paragraph [[0099]] *<br>----- | 1-15 | |
| X | WO 2004/015853 A1 (NOKIA CORP [FI]; SCHECK HANS-OTTO [FI]) 19 February 2004 (2004-02-19)<br>* page 22, line 34 - page 23, line 3 *<br>* figure 2 *<br>----- | 1,4-8, 11-15 | |

-/--

The present search report has been drawn up for all claims

| Place of search | Date of completion of the search | Examiner |
|---|---|---|
| Berlin | 13 January 2012 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 30 5941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 376 967 A2 (BROADCOM CORP [US]) 2 January 2004 (2004-01-02) <br> * figure 6 * <br> * figure 7 * <br> ----- | 1,4-8, 11-15 | |
| X | WO 2004/054194 A1 (PHILIPS INTELLECTUAL PROPERTY [DE]; KONINKL PHILIPS ELECTRONICS NV [NL] 24 June 2004 (2004-06-24) <br> * figure 1 * <br> * page 9, line 16 - line 18 * <br> * page 11, line 22 - line 23 * <br> * page 15, line 5 - line 16 * <br> ----- | 1,4-8, 11-15 | |
| X | US 2009/116586 A1 (ARAMBEPOLA BERNARD [GB] ET AL) 7 May 2009 (2009-05-07) <br> * paragraph [0031] - paragraph [0032] * <br> ----- | 1,4-8, 11-15 | |
| X | US 7 366 255 B1 (HWANG CHIEN-MEEN [US] ET AL) 29 April 2008 (2008-04-29) <br> * figure 4 * <br> * column 6, line 60 - column 7, line 41 * <br> ----- | 1,4-8, 11-15 | |
| | | | TECHNICAL FIELDS SEARCHED (IPC) |

The present search report has been drawn up for all claims

| Place of search | Date of completion of the search | Examiner |
|---|---|---|
| Berlin | 13 January 2012 | Douglas, Ian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 11 30 5941

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2012

| Patent document cited in search report | | Publication date | Patent family member(s) | | Publication date |
|---|---|---|---|---|---|
| WO 2008026178 | A2 | 06-03-2008 | EP 2060081 A2 | | 20-05-2009 |
| | | | US 2010008449 A1 | | 14-01-2010 |
| | | | WO 2008026178 A2 | | 06-03-2008 |
| US 2005135521 | A1 | 23-06-2005 | AT 385117 T | | 15-02-2008 |
| | | | CN 1898932 A | | 17-01-2007 |
| | | | DE 602004011563 T2 | | 30-04-2008 |
| | | | EP 1698135 A1 | | 06-09-2006 |
| | | | TW I256780 B | | 11-06-2006 |
| | | | US 2005135521 A1 | | 23-06-2005 |
| | | | WO 2005067250 A1 | | 21-07-2005 |
| US 2002097812 | A1 | 25-07-2002 | NONE | | |
| US 2009147886 | A1 | 11-06-2009 | NONE | | |
| WO 2004015853 | A1 | 19-02-2004 | AU 2002321694 A1 | | 25-02-2004 |
| | | | CN 1639962 A | | 13-07-2005 |
| | | | EP 1525659 A1 | | 27-04-2005 |
| | | | US 2004082300 A1 | | 29-04-2004 |
| | | | WO 2004015853 A1 | | 19-02-2004 |
| EP 1376967 | A2 | 02-01-2004 | EP 1376967 A2 | | 02-01-2004 |
| | | | US 2003231723 A1 | | 18-12-2003 |
| WO 2004054194 | A1 | 24-06-2004 | AU 2003302864 A1 | | 30-06-2004 |
| | | | CN 1723669 A | | 18-01-2006 |
| | | | EP 1573995 A1 | | 14-09-2005 |
| | | | JP 2006509438 A | | 16-03-2006 |
| | | | US 2006039506 A1 | | 23-02-2006 |
| | | | WO 2004054194 A1 | | 24-06-2004 |
| US 2009116586 | A1 | 07-05-2009 | NONE | | |
| US 7366255 | B1 | 29-04-2008 | NONE | | |

EPO FORM P0459

For more details about this annex : see Official Journal of the European Patent Office, No. 12/82